# EUROPEAN PATENT APPLICATION

(11) **EP 1 570 685 A1**
(43) Date of publication of application: **07.09.2005**
(21) Application number: 03732198.1
(22) Date of filing: 13.06.2003
(51) Int. Cl.: H04Q 7/00

(54) **SPREAD SPECTRUM COMMUNICATION SYSTEM**

(30) Priority: 03.12.2002 CN 02151185
(71) Applicant: ZTE Corporation, Guangdong (CN)
(72) Inventor: XIANG, Jiying, ZTE Plaza, Keji Road South, Shenzhen, Guangdong 518057 (CN); ZHANG, Yongzhi, ZTE Plaza, Keji Road South, Shenzhen, Guangdong 518057 (CN); ZHAO, Xianming, ZTE Plaza, Keji Road South, Shenzhen, Guangdong 518057 (CN); XIE, Daxiong, ZTE Plaza, Keji Road South, Shenzhen, Guangdong 518057 (CN); ZHU, Jinyun, ZTE Plaza, Keji Road South, Shenzhen, Guangdong 518057 (CN); ZHU, Longming, ZTE Plaza, Keji Road South, Shenzhen, Guangdong 518057 (CN); YANG, Ri, ZTE Plaza, Keji Road South, Shenzhen, Guangdong 518057 (CN); ZHANG, Wanchun, ZTE Plaza, Keji Road South, Shenzhen, Guangdong 518057 (CN); Li, Weidong, ZTE Plaza, Keji Road South, Shenzhen, Guangdong 518057 (CN)
(74) Representative: Axelsson, Nils Ake A.L.
(86) International application number: PCT/CN2003/000460
(87) International publication number: WO 2004/052028

(57) **Abstract**

A spread spectrum communication system, comprising a base station controller, a centralized baseband system and RF systems, wherein: the centralized baseband system is coupled to the base station controller through certain interface; the centralized baseband system comprises: one or more baseband subsystems and a clock subsystem which provides clock signals for the baseband subsystems; the baseband subsystems are coupled to the RF systems through inner interfaces. The present invention centralizes the baseband systems of multiple base stations, and reduces the quantity of the base stations and the interfaces between the base stations and the base station controller. The centralized baseband system and the RF systems are entirely independent, which is very convenient for station collocation. The RF systems can be put near to the antenna thus reduce the cable lose, the requirement of the transmission power and the input power of the base station is then reduced; the base stations and the base station controller can be installed at the same address overtaking the limit of the device room, so it saves a large amount of money for the operator and improves maintainability of the apparatus.

## Description

### Field of the Invention

The present invention relates to wireless communications, and more particularly, to a spread spectrum communication system separating the base band from radio frequency site in the base station, capable of establishing loop networks of radio frequency sites.

### Background of the Invention

Spread spectrum communication system can be divided into many types such as IS95 CDMA, cdma2000, WCDMA, TD-SCDMA, etc. in accordance with different wireless modulation demodulation techniques. The fixed part of the spread spectrum communication system is composed of two elements: a base station controller (BSC) or central node (RNC) and several base stations (BTS) or nodes (Node B). The base station connects with the base station controller through an Abis or luB interface, Such an interface exists between each base station and the base station controller, thus there will be multiple interfaces when there are multiple base stations. Through the base station controller, every base station communicates with the others.

In conventional spread spectrum communication systems, one base station takes charge of one or a few radio frequency sites to access radio services in one area. Because of limited coverage of one base station, it needs multiple base stations for larger area, thus multiple interfaces should be supported by the base station controller. The base stations connected with the base station controller will be consequently numerous, therefore, maintainability of the spread spectrum communication system is reduced to a certain extent and costs will be increased. The baseband and radio frequency site act as a whole, which is complex in structure and hard to be put outdoors. Due to the separation of locations, each base station requires to rent a room, thus n rooms should be rented for n base stations, which increases costs for the operator.

Moreover, star network is commonly adopted in forming network between the baseband and radio frequency site today, or chain network. Star network requires more optical fibers; especially multiple pairs of radial optical fibers are needed in baseband. Chain network requires fewer optical fibers; however its reliability is low because power down or damage of any site will result in the failure of the following stage, which might produce a great effect owing to usually bad environment conditions of the base stations.

Loop network can save a large amount of optical fibers, reduce difficulty in network topology and enhance network reliability, and the star network and chain network can be regarded as a special modality of loop network. However, forming loop network is most difficult. Optical synchronous transmission network SDH can actualize many types of forming networks including loop network, but hard to satisfy the requirement transmitting from the baseband to the radio frequency sites. The main problems are as following:

In mobile communication systems, some system (such as CDMA) requires to keep the base station antenna transmission synchronous with the system time accurately. Thus it requires to obtain the system clock boundary through accurate timing system (for example: Global Positioning System GPS) in baseband portion, and to broadcast periodical boundary signals over the whole network. The optimal method for transmitting such boundary signals is to synchronistically insert the clock boundary information among forward and reverse data, which brings expenses for processing interfaces of the baseband and the radio frequency sites. Besides, if the baseband and the radio frequency sites are not installed at the same address, the transmission delay from the baseband to the radio frequency sites (the delay changes with the status of link turnover, and no such problem in chain or star network) should be measured accurately and in real time; then the advance of forward transmission time will be adjusted according to the delay to reversely correct the centre of the search window. However, real-time measurement of the transmission delay related to the turnover is not supported by SDH. Furthermore, signals transmitted from the baseband to the radio frequency sites have high speed and require high real-time and little turnover delay; transmission from the baseband to the radio frequency sites doesn't keep synchronization with SDH standard speed set. Thus the above-mentioned particularities make it hard for SDH to satisfy the requirement of transmission from the mobile communication baseband to the radio frequency sites.

One characteristic of the loop network from the baseband to the radio frequency site is: the baseband portion is the only source of forward link and the only destination of reverse link without the direct communication between the radio frequency sites. So some certain optimizations of the loop network from the baseband to the radio frequency sites can be made basing on this characteristic.

### Summary of the Invention

The object of the present invention is to provide a spread spectrum communication system to avoid low maintainability and high cost of the conventional spread spectrum communication system, and easy to form high real-time and transmission efficiency network to satisfy the requirement of transmitting from the baseband to the radio frequency sites.

The first aspect of the invention provides a spread spectrum communication system, comprising a base station controller, a centralized baseband system and RF systems, wherein:
the centralized baseband system is coupled to the base station controller through an Abis or lub interface;
the centralized baseband system comprises: one or more baseband subsystems and a clock subsystem which provides clock signals for the baseband subsystems;
the baseband subsystems are coupled to the RF systems through inner interfaces.

The second aspect of the invention provides a spread spectrum communication system, comprising a base station controller, a centralized baseband system and RF systems, wherein:
the centralized baseband system is coupled to the base station controller through an Abis or lub interface;
the centralized baseband system comprises one baseband subsystem and a clock subsystem which provides clock signals for the baseband subsystem; the baseband subsystem further comprises a master baseband subsystem and several slave baseband subsystems; the master baseband subsystem is coupled to the slave baseband subsystems to centrally control all the slave baseband subsystems; and the slave baseband subsystems are coupled to the RF systems through inner interfaces.

The centralized baseband system transmits forward signals to two loop links at the same time.

The RF system receives the forward signals from the two loop links at the same time, but only one of the two loop links is selected at one moment by a link selector controlled by the link status, and an appropriate link is selected through switching by the link selector while the link is in abnormal condition (For example, if either link is damaged, switch to the other link, and if both links are normal, select either of them).

The RF system transmits reverse signals in two directions of the loop links at the same time.

The baseband system receives the reverse signals from the two loop links at the same time, but only one of the two loop links is selected at one moment by a link selector controlled by the link status, and an appropriate link is selected through switching by the link selector while the link is in abnormal condition.

The present invention reduces the quantity of the base stations and the interfaces between the base stations and the base station controller through centralizing the baseband system of multiple base stations, and achieves the same coverage effect. The centralized baseband system and the RF systems are entirely independent, which is very convenient for site deploying. The RF systems can be put near to the antenna and the cable lose is reduced, the requirement of the transmission power and the input power of the base station is then reduced. Because there are only RF parts in each RF site, the structure of the site is simplified, and it makes the site easy to be outdoor and miniaturized. It will also be possible to use one room to cover a large coverage area, and if the centralized baseband system is an outdoor type, there is no necessary to rent a room at all. Finally, installing the base stations and the base station controller at the same spot breaks through the limit of the room space, so it saves a large amount of money for the operator and improves maintainability of the apparatus.

### Brief Description of the Drawings

Fig.1 is a structural diagram of the spread spectrum communication system in conventional art;
Fig.2 is a structural diagrammatic drawing of the first aspect of the spread spectrum communication system provided by the present invention;
Fig.3 is a structural diagrammatic drawing of the second aspect of the spread spectrum communication system provided by the present invention;
Fig.4 is a diagrammatic drawing of installing the base station controller and the centralized baseband system at the same address in the spread spectrum communication system;
Fig.5 is a structure of network forming of the spread spectrum communication system provided by the present invention;
Fig.6 is the signal processing device of RF system in loop network;
Fig.7 is a diagrammatic drawing regarding the chain network and the star network as the loop network;
Fig.8 is an embodiment of network forming of the spread spectrum communication system in accordance with the present invention.

### Detailed Description of the Preferred Embodiments:

Now, the present invention will be described in details with reference to the accompanying drawings and the preferred embodiments.

The fixed part of the spread spectrum communication system is composed of two elements: a base station controller (BSC) (or central node RNC) and several base stations (BTS) (or nodes Node B). The base station connect with the base station controller through an Abis or lub interface. Such an interface exists between each base station and base station controller, thus there will be multiple interfaces when there are multiple base stations. And the base stations communicate with each other via the base station controller. The base station is usually composed of two parts: baseband system and radio frequency system, in which the baseband system conducts digits baseband processing and the interface connecting to the base station controller. The radio frequency site conducts the up and down conversion of the signal from/to RF band.

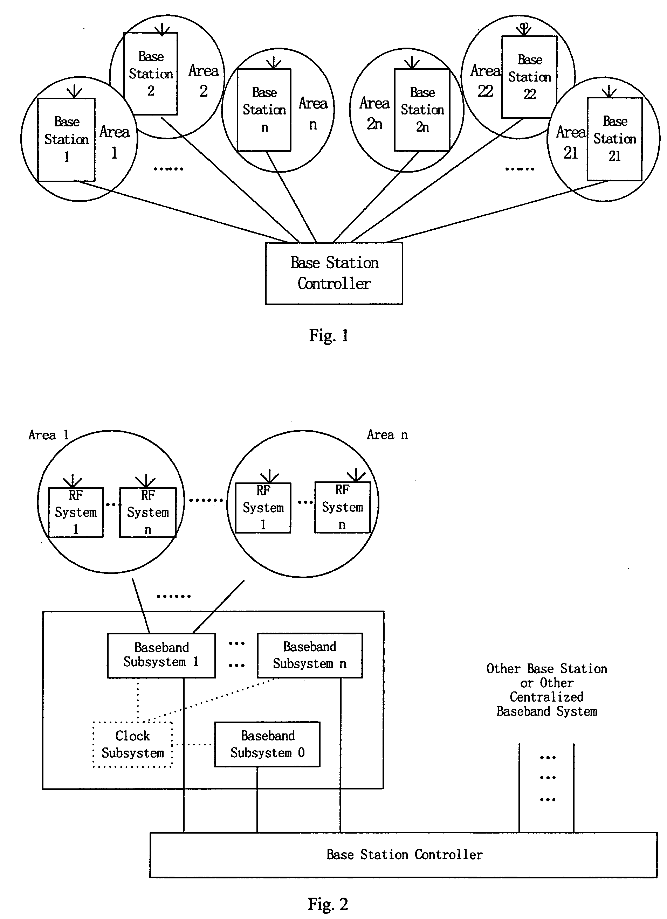

In the conventional systems as shown in fig. 1, one base station takes charge of one or a few radio frequency sites to access radio services in one area. Because of limited coverage of one base station, it needs multiple base stations fro larger area, thus multiple interfaces should be supported by the base station controller, therefore, reliability of the spread spectrum communication system is reduced to a certain extent.

The base station is complex in structure, hard to be put outdoors, and the cost is high. Because one room is required for each base station, multiple rooms are required in order to cover a large area. Therefore, costs for rooms will be increased.

Each base station requires accurate timing system, so multiple independent accurate timing system are required for multiple base stations, which results in cost increasing and reliability decreasing.

Besides, the locations of the base stations should be dispersed to meet coverage requirement, which certainly results in the difficulty of maintenance.

In order to solve the above problems in the conventional arts, the present invention provides the first aspect of the spread spectrum communication system, as shown in fig. 2, comprising a base station controller, at least one centralized baseband system and multiple RF systems; the centralized baseband system is coupled to the base station controller through an Abis or lub interface; the centralized baseband system comprises one or more baseband subsystems and one clock subsystem which can be shared by each baseband subsystem, i.e., clock signals are provided for several baseband subsystems at the same time; each baseband subsystems are coupled to multiple RF systems through inner interfaces. Each baseband subsystem can be designed corresponding to one clock subsystem which provides clock signals for each baseband subsystem respectively.

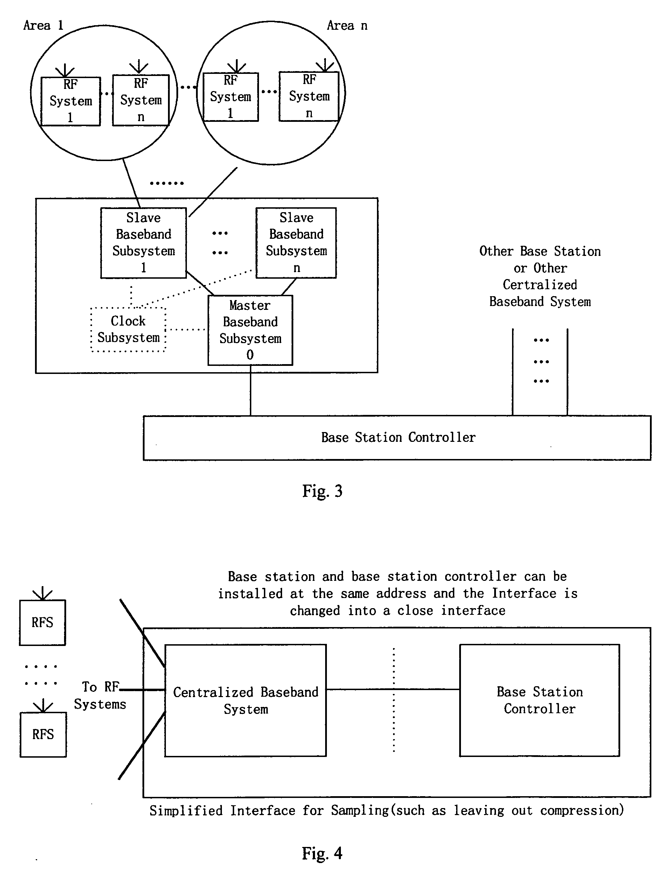

Furthermore, the present invention provides the second aspect of the spread spectrum communication system, as shown in fig. 3, comprising a base station controller, at least one centralized baseband system and multiple RF systems; the centralized baseband system is coupled to the base station controller through an Abis or lub interface; the centralized baseband system further comprises one master baseband subsystem, several slave baseband subsystems and a clock subsystem from which clock signals are sent to each master baseband subsystem and each slave baseband subsystem; the master baseband subsystem is coupled to the slave baseband subsystems to centrally control all the slave baseband subsystems;

Multiple baseband subsystems can share one clock, so that each baseband subsystem need not be configured to an independent accurate clock (for example: Global Positioning System GPS), which reduces cost and improves reliability. Moreover, control circuit and interface circuit connecting with the baseband controller can be shared. The sharing can also reduce cost, simplify design and improve reliability. For the base station controller, centralized control represents one and only base station, so as to greatly reduce the total number of base stations controlled by the base station controller, which is beneficial to improve the centralization and reliability of the base station controller.

Centralized baseband system and remote RF systems make it possible to install the base station baseband part and the base station controller at the sameaddress, and enhance the significance of applying such a configuration method. Fig.4 is an example of installing the baseband controller and the centralized baseband system at the sameaddress. It is shown that the former remote interface between the base station controller and the base station is changed into a close interface with less transmission method limit, allowing the use of simple interface with low requirement. For instance, the Compression Protocol regulated for fulfilling the requirements of long distance and low band width transmission can be removed so that setting up the base station and the base station controller can be greatly simplified.

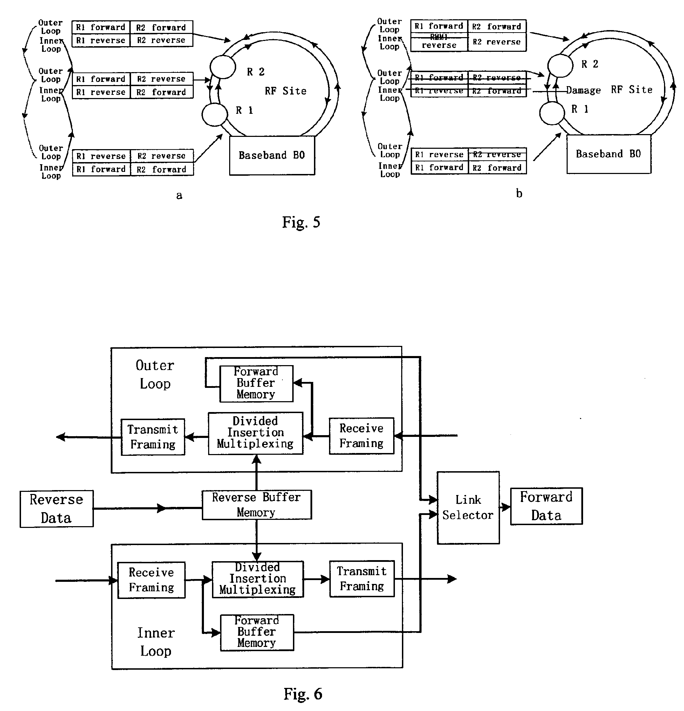

Fig.5 is a topological structure of loop network forming of the centralized baseband system and radio frequency sites provided by the present invention. Double fiber bidirectional loop is the fundamental structure, from which other types such as four fiber loop network can be derived. There will be one centralized baseband system and multiple RF systems in one loop network. The RF system obtains forward service data and signaling from the base station through the loop network, and the baseband obtains reverse service data and signaling from the RF system through loop network.

The loop network can be designed to be a forward/reverse multiplexing, entirely backup, rapid transmission conversion supported network by using the peculiarity of wireless communications, i.e., the RF system ends special real-time forward data and initiates special real-time reverse data at the same time and the baseband is the only source of forward link and the only destination of reverse link

It is an example of a simple loop network including two RF systems R1 and R2 shown in fig. 5, and two RF stations divide the whole loop into 3 sections.

Fig. 5a shows the forward and reverse multiplexing method while normal working; and the transmission signals of each section in normal conditions are marked in fig.5a. In normal working conditions, from baseband B0 clockwise, the transmission data of optical fibers in three sections are:
On the optical fiber section from the baseband B0 to R1, inner loop transmission: R1 forward link + R2 forward link, outer loop transmission: R1 reverse link + R2 reverse link.
On the optical fiber section from R1 to R2, inner loop transmission: R1 reverse link + R2 forward link, outer transmission: R1 forward link + R2 reverse link. Operation done by R1: receiving the forward data belonging to R1 and inserting the reverse data of R1 into the former forward time slot. The inner loop and the outer loop operate in the same way.
On the optical fiber section from R2 to baseband B0, inner loop transmission: R1 reverse link + R2 reverse link, outer loop transmission: R1 forward link + R2 forward link. R2 operation is similar to R1 operation.

Some special time slots are assigned for each RF system, and the baseband sends the same data to the inner loop and the outer loop in forward link at the same time. Although data transmit in two loops, the RF system only selects one loop as the real forward data to transmit. In reverse link, each RF system transmits data to the inner loop and the outer loop at the same time. Because the RF system has ended the forward time slot belonging to itself, the time slot can be employed to transmit the reverse data of the station. Thus the forward data and the reverse data of one RF system share one time slot, which saves band width efficiently.

The reverse data from the inner loop and the outer loop are received in the baseband at the same time. However, the link selector selects only one loop as active. And different RF systems can select different active link at one moment. For example, at the moment T0, R1 active link can be inner loop and R2 active link can be outer loop. The link selector selects appropriate link in accordance with the status of links. When link abnormity takes place, the link selector turns over correspondingly.

Fig. 5b shows the forward and reverse multiplexing method while abnormal working.

When there is link breaks of the optical fiber as shown in fig. 5b, from baseband B0 clockwise, the transmission data of optical fibers in three sections are:
On the optical fiber section from the baseband B0 to R1, inner loop transmission: R1 forward link + R2 forward link, outer loop transmission: R1 reverse link + R2 reverse link.
On the optical fiber section from R1 to R2, inner loop transmission: R1 reverse link + R2 forward link, outer transmission: R1 forward link + R2 reverse link. Operation done by R1: receiving the forward data belonging to R1 and inserting the reverse data of R1 into the former forward time slot. The inner loop and the outer loop operate in the same way.
On the optical fiber section from R2 to baseband B0, inner loop transmission: R1 reverse link + R2 reverse link, outer loop transmission: R1 forward link + R2 forward link. R2 operation is similar to R1 operation.

At this moment, the forward link of R1 can be from the inner loop, but the forward data of R2 are from the outer loop because the inner loop has been broken. Similarly, the reverse data of R1 return from the outer loop, and the reverse link of R2 can still return from the outer loop.

On the basis of the above analysis, no matter in normal status or in abnormal status, the RF systems carry out the same data processing although the links are switched. And the inner loop operation and the outer loop operation are completely identical to each other, so that the control complexity is reduced, and the switching speed is rapid due to entirely warm backup.

Fig.6 is the implementation block diagram of the RF system in the loop network forming.

For the inner loop, the forward/reverse mixed data coming from the upstream RF system are divided into two routes after receipt and framing: one route enters into the forward buffer memory, selects its own time slot at first, and then enters into a select circuit together with the forward data of the outer loop to select an activated forward output pursuant to certain rules; another route enters into a divided insertion multiplexing unit receiving the reverse signals locally generated simultaneously, and the time slot occupied by the forward link data is replaced by the reverse link data. Then the data is transmitted to the downstream through the transmission module of the inner loop.

The outer loop processing procedure is similar to that of the inner loop. The reverse signals are broadcasted to the inner and the outer loops. And the forward signal of the RF system is selected depending upon the status of the present link, and it can also be selected manually.

The loop network implementation device of the baseband part is similar to the RF systems, but it broadcasts the forward data in the inner and the outer loops at the same time, and selects the activated path in reverse link for each RF system pursuant to certain rules.

Due to the flexibility brought by the loop network, topological structure of all kinds of networks including star network and chain network can be regarded as special loop network. Therefore, the same processing mechanism can be employed in different network topological structures, which can simplify the design and improve the reliability.

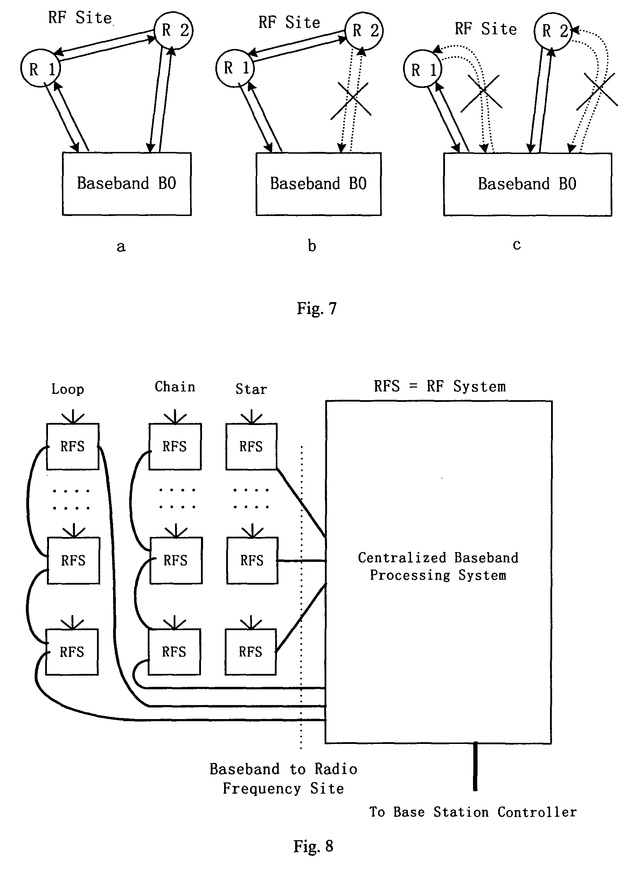

Fig.7 is a diagrammatic drawing regarding the chain network and the star network as the loop network, in which, fig. 7a is a typical loop network without double fibers break; for the chain network shown in fig. 7b, joining in of the dashed lines can primarily regard the chain network as a typical loop network, and then imagine the double fibers of the dashed lines have been broken, thus the network can be regarded as a kind of loop network with broken double fibers; and for the star network shown in fig. 7c, similarly, the network can be regarded as the loop network with broken double fibers composed of multiple independent single nodes. Because the chain network and the star network can be regarded as the loop network in abnormal conditions, the above analysis of the network forming operation method for the loop network structures of the present invention is also applicable for the two networks.

Fig.8 is an embodiment of network forming link of the RF systems and the centralized baseband system in the spread spectrum communication system in accordance with the present invention. Fig. 8 integrates three methods of loop network, star network and chain network for the RF systems. The first, each RF system connects with the centralized baseband system respectively, so that RF systems are star connected with each other; the second, multiple RF systems connect in series, and the RF system at one end connects with the centralized baseband system after the chain is composed; the third, multiple RF systems connect in series, and the RF systems at two ends connect with the centralized baseband system, and these RF systems make up of the loop. It should be noted that besides the three integrated network forming methods shown in fig. 8, it can be any of the above methods, one or two, connect with the centralized baseband system. In sum, the forward and reverse multiplexing mechanism according to the present invention is entirely appropriate to the network forming structure of any above combinations.

It will be understood that the above embodiments are used only to explain but not to limit the present invention. In despite of the detailed description of the present invention with referring to above preferred embodiments, it should be understood that various modifications, changes or equivalents can be made by those skilled in the art without departing from the spirit and scope of the present invention. All of the modifications, changes or equivalents should be covered in the scope of accompanying claims of the application.

## Claims

1. A spread spectrum communication system, comprising a base station controller, **characterized by** comprising a centralized baseband system and RF systems, wherein:the centralized baseband system is coupled to the base station controller through an Abis or lub interface;
the centralized baseband system comprises: one or more baseband subsystems and a clock subsystem which provides clock signals for the baseband subsystems;
the baseband subsystems are coupled to the RF systems through inner interfaces.

2. The spread spectrum communication system of claim 1, wherein the clock subsystem provides clock signals for each baseband subsystem at the same time.

3. The spread spectrum communication system of claim 1, wherein the clock subsystem can be set in one to one correspondence of the baseband subsystem with the same quantities, and the clock subsystem provides clock signals for the corresponding baseband subsystem respectively.

4. The spread spectrum communication system of claim 1, 2 or 3, wherein the RF system can be a RF system unit consisting of multiple RF systems which are connected in series, and the RF systems located at the two ends are respectively coupled to the centralized baseband system to form a loop network.

5. The spread spectrum communication system of claim 4, wherein it further comprises another group of multiple RF systems connected in series, and a RF system located at either end is coupled to the centralized baseband system to form a chain network.

6. The spread spectrum communication system of claim 1 or 5, wherein it further comprises another group of multiple RF systems respectively coupled to the centralized baseband system to form a star network.

7. The spread spectrum communication system of claim 1, 2, 3 or 5, wherein the centralized baseband system and the base station controller are installed at the sameaddress.

8. The spread spectrum communication system of claim 1, 2, 3 or 5, wherein:the centralized baseband system transmits forward signals to two loop links at the same time;the RF system receives the forward signals from the two loop links at the same time, but only one of the two loop links is selected at one moment by a link selector controlled by the link status, and an appropriate link is selected through switching by the link selector while the link is in abnormal condition.

9. The spread spectrum communication system of claim 1, 2, 3 or 5, wherein:the RF system transmits reverse signals in two directions of the loop links at the same time;the baseband system receives the reverse signals from the two loop links at the same time, but only one of the two loop links is selected at one moment by a link selector controlled by the link status, and an appropriate link is selected through switching by the link selector while the link is in abnormal condition.

10. A spread spectrum communication system, comprising a base station controller, **characterized by** further comprising a centralized baseband system and RF systems; wherein:
the centralized baseband system is coupled to the base station controller through an Abis or lub interface;
the centralized baseband system comprises one baseband subsystem and a clock subsystem which provides clock signals for the baseband subsystem; the baseband subsystem further comprises a master baseband subsystem and several slave baseband subsystems; the master baseband subsystem is coupled to the slave baseband subsystems to centrally control all the slave baseband subsystems; and the slave baseband subsystems are coupled to the RF systems through inner interfaces.

11. The spread spectrum communication system of claim 10, wherein the clock subsystem provides clock signals for each baseband subsystem at the same time.

12. The spread spectrum communication system of claim 10, wherein the clock subsystem can be set in one to one correspondence of the baseband subsystem with the same quantities, and the clock subsystem provides clock signals for the corresponding baseband subsystem respectively.

13. The spread spectrum communication system of claim 10, 11 or 12, wherein the RF system can be a RF system unit consisting of multiple RF systems which are connected in series, and the RF systems located at the two ends are respectively coupled to the centralized baseband system to form a loop network.

14. The spread spectrum communication system of claim 13, wherein it further comprises another group of multiple RF systems connected in series, and a RF system located at either end is coupled to the centralized baseband system to form a chain network.

15. The spread spectrum communication system of claim 10 or 14, wherein it further comprises another group of multiple RF systems respectively coupled to the centralized baseband system to form a star network.

16. The spread spectrum communication system of claim 10, 11, 12 or 14, wherein the centralized baseband system and the base station controller are installed at the sameaddress.

17. The spread spectrum communication system of claim 10, 11, 12 or 14, wherein:
the centralized baseband system transmits forward signals to two loop links at the same time;
the RF system receives the forward signals from the two loop links at the same time, but only one of the two loop links is selected at one moment by a link selector controlled by the link status, and an appropriate link is selected through switching by the link selector while the link is in abnormal condition.

18. The spread spectrum communication system of claim 10, 11, 12 or 14, wherein:
the RF system transmits reverse signals to two directions of the loop links at the same time;
the baseband system receives the reverse signals from the two loop links at the same time, but only one of the two loop links is selected at one moment by a link selector controlled by the link status, and an appropriate link is selected through switching by the link selector while the link is in abnormal condition.
